# EUROPEAN PATENT APPLICATION

(11) **EP 4 647 871 A1**
(43) Date of publication of application: **12.11.2025**
(21) Application number: 25174275.5
(22) Date of filing: 05.05.2025
(51) Int. Cl.: G06F 1/3206, G06F 1/324, G06F 1/3234

(54) **FREQUENCY SCALING IN MULTI-TENANT ENVIRONMENTS**

(30) Priority: 06.05.2024 US 202463643120 P; 06.05.2024 IN 202441035889; 07.05.2024 IN 202441035994; 18.09.2024 US 202418889249
(71) Applicant: Intel Corporation, Santa Clara, CA 95054 (US)
(72) Inventor: MACNAMARA, Chris, Limerick, V94X65T (IE); BROWNE, John J., Limerick, V94 C44N (IE); PALIT, Nilanjan, Northborough, 01532 (US); HIREMATH, Chetan, Portland, 97229 (US); SEXTON, Rory, Cork, P61DX06 (IE); WALSH, Conor, Tullamore, Co. Offaly, R35V303 (IE); LAATZ, Kevin, Caherconlish, Co. Limerick, V94 ER2F (IE); GLUSTSOV, Andriy, San Diego, 92130 (US); MCCARTHY, Peter, Ennis, V95K2P1 (IE); DONNELLAN, Katelyn, Kilkishen, V95E0YN (IE); DEEP AJMERA, Vishal, 560102 Bangalore (IN); HUNT, David, Meelick, CE V94 PR3W (IE); NOONAN, Gordon, Corbally, Limerick, V94 Y4AP (IE)
(74) Representative: 2SPL Patentanwälte PartG mbB

(57) **Abstract**

Examples described herein relate to circuitry to: monitor utilization data for a plurality of processes; determine one or more priority levels associated with at least one of the plurality of processes based on policy parameters; and adjust a frequency of operation of the interface circuitry based on the monitored utilization data and the determined priority levels of the processes. In some examples, adjust the frequency of operation of the interface circuitry is to prioritize frequency of operation requested by a higher priority workload over a frequency of operations requested by a lower priority workload.

## Description

### PRIORITY CLAIMS

This application claims the benefit of priority to the following applications: U.S. Provisional Application Number 63/643,120, filed May 6, 2024; Indian Patent Application Serial Number 202441035889, filed May 6, 2024; and Indian Patent Application Serial Number 202441035994, filed May 7, 2024. The entire contents of those applications are incorporated by reference.

### BACKGROUND

System on chips (SoCs) are the building blocks of datacenter and Edge computing platforms. SoCs can include general-purpose hardware with compute cores, as well as task specific circuitry such as cryptographic and artificial intelligence (AI) or machine learning (ML) accelerators, data copying technologies, circuitry and systems to provide security domains, network connectivity, and packet processing.

The processors can utilize circuitry to interface with other components of the SoC, such as memory and peripheral devices. Examples of the circuitry include an uncore from Intel Corporation, system agent, or Infinity Fabric (IF) from Advanced Micro Devices (AMD). For example, the circuitry includes interfaces to input output (IO) circuitry, interface to a network interface controller, and a memory controller. The circuitry operates at a particular frequency and the frequency of operation of the circuitry impacts the performance of the system. Setting the frequency of operation of the circuitry to a maximum level can avoid reducing performance of the system but increases power consumption.

### BRIEF DESCRIPTION OF THE DRAWINGS

FIG. 1 depicts an example system.
FIG. 2 depicts an example operation.
FIG. 3 depicts an example process.
FIG. 4 depicts an example process.
FIG. 5 depicts an example process.
FIG. 6 depicts an example system.
FIG. 7 depicts an example system.
FIG. 8 depicts an example system.
FIG. 9 depicts an example system.
FIG. 10 depicts an example system.

### DETAILED DESCRIPTION

Adjusting frequency of operation of the circuitry that provides interfaces to other components can reduce power consumption, but can disrupt operations of processor-executed processes. For example, changing the frequency of operation of the circuitry that provides interfaces to other components can disrupt a communication path to memory, disrupt input/output (I/O), or disrupt core-to-core communications. For certain processor-executed processes, changing frequency of operation of the circuitry can impact key performance indicators (KPIs), such as latency, packet loss, jitter, and overall determinism.

In order to reduce a likelihood of impacting operations of processes that utilize the circuitry that provides interfaces to other components, various examples can adjust power and/or frequency of the circuitry that provides one or more processors with interfaces to other components based on utilization of multiple processors and in addition, or alternatively, based on one or more of: priority level of a requester that requested the adjustment of the frequency of the circuitry, type of the requester, or level of busyness or utilization level of a process executed by one or more processors. For example, by considering busyness or utilization level of processors or processes, disruption of performance of processes, from reducing frequency of operation of the circuitry that provides interfaces to other component, can be potentially avoided. For example, by considering priority level of a requester, that requested reducing frequency of operation of the circuitry that provides interfaces to other component, disrupting operation of higher priority processes can be potentially avoided.

### UTILIZATION-BASED CONTROL OF INTERFACE CIRCUITRY

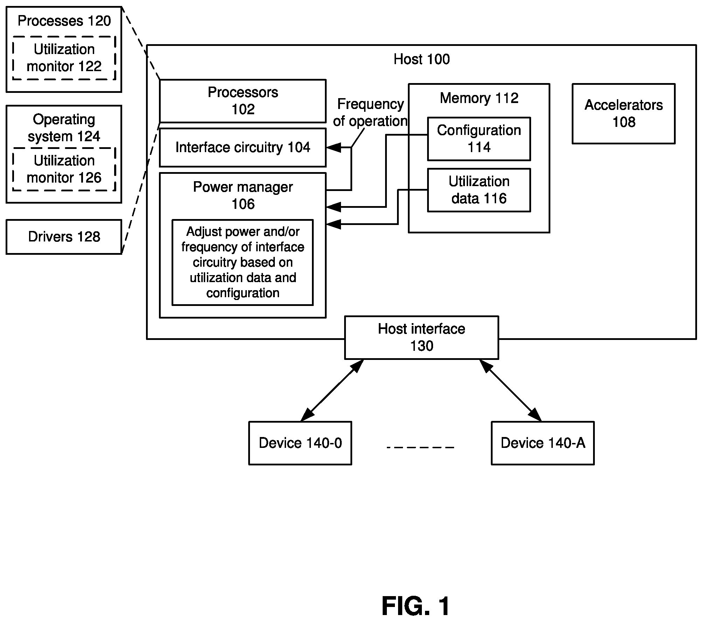

FIG. 1 depicts an example system. Host 100 can be embodied as a server or host system. In some examples, host 100 can be implemented as an SoC or one or more tiles. An SoC can include an integrated circuit that includes one or more of: one or more processors, memory interface, input/output (I/O) circuitry, storage interface, network interface, and other circuitry. A tile can include one or more processors and I/O circuitry formed in an SoC or connected by a circuit board. Various examples of circuitry and software that can be utilized by host 100 are described at least with respect to FIG. 11.

Processors 102 can include one or more of: a central processing unit (CPU), a processor core, graphics processing unit (GPU), neural processing unit (NPU), general purpose GPU (GPGPU), field programmable gate array (FPGA), application specific integrated circuit (ASIC), tensor processing unit (TPU), matrix math unit (MMU), or other circuitry. A processor core can include an execution core or computational unit or engine (e.g., arithmetic logic units (ALU), floating-point unit (FPU), or other circuitry) that is capable of executing instructions.

Cores can be homogeneous (e.g., same processing capabilities) and/or heterogeneous devices (e.g., different processing capabilities). Frequency or power use of a core can be adjustable. A core can be sold or designed by Intel^{®}, ARM^{®}, Advanced Micro Devices, Inc. (AMD)^{®}, Qualcomm^{®}, IBM^{®}, Nvidia^{®}, Broadcom^{®}, Texas Instruments^{®}, or compatible with reduced instruction set computer (RISC) instruction set architecture (ISA) (e.g., RISC-V), among others. A core can access to its own cache and read only memory (ROM), or multiple cores can share a cache or ROM.

Interface circuitry 104 can include or more of: a memory controller, a shared cache (e.g., last level cache (LLC)), a cache coherency manager, arithmetic logic units, floating point units, core or processor interconnects, Caching/Home Agent (CHA), fabric interface circuitry, memory interface circuitry, device interface circuitry, and/or bus or link controllers. Interface circuitry 104 can include circuitry that performs one or more of: direct memory access (DMA) engine connection, non-cached coherent master connection, data cache coherency between cores and arbitrates cache requests, or Advanced Microcontroller Bus Architecture (AMBA) capabilities. Interface circuitry 104 can include an uncore, system agent, or Infinity Fabric (IF).

Interface circuitry 104 can be utilized by one or more processor cores or processors 102. For example, an instance of interface circuitry 104 can be utilized by cores associated with one or more core lists specified in configuration 114, a second instance of interface circuitry 104 can be utilized by cores associated with a processor socket specified in configuration 114, and/or a third instance of interface circuitry 104 can be utilized by cores associated with a system of two or more processor sockets specified in configuration 114.

Various types of inter-processor communication techniques can be used, such as but not limited to messaging, inter-processor interrupts (IPI), inter-processor communications, and so forth. Cores can be connected in any type of manner, such as but not limited to, bus, ring, or mesh. Cores may be coupled via an interconnect to a system agent (uncore). A processor socket can include mechanical components that provide mechanical and electrical connections between a processor and a printed circuit board (PCB).

Processors 102 can execute processes 120. Processes 120 can include one or more of: application, process, thread, a virtual machine (VM), microVM, container, microservice, or other virtualized execution environment. Various examples of processes 120 can perform packet processing based on one or more of Data Plane Development Kit (DPDK), Storage Performance Development Kit (SPDK), OpenDataPlane, Network Function Virtualization (NFV), software-defined networking (SDN), Evolved Packet Core (EPC), Internet of Things (IoT), 5G Radio Access Network, or 5G network slicing. Some example implementations of NFV are described in ETSI specifications or Open Source NFV MANO from ETSI's Open Source Mano (OSM) group. Processes can include virtual network function (VNF), such as a service chain or sequence of virtualized tasks executed on generic configurable hardware such as firewalls, domain name system (DNS), caching or network address translation (NAT) and can run in virtual execution environments. VNFs can be linked together as a service chain. Processes can include a cloud native network function (CNF), which can include a network function that executes inside a container. In some examples, EPC is a 3GPP-specified core architecture at least for Long Term Evolution (LTE) access. 5G network slicing can provide for multiplexing of virtualized and independent logical networks on the same physical network infrastructure. Some processes can perform video processing or media transcoding (e.g., changing the encoding of audio, image, or video files).

Host interface 130 can provide communications between host 100 and one or more devices 140-0 to 140-A, where A is an integer. In various examples, host interface 130 can provide communications consistent with Peripheral Component Interconnect Express (PCIe), Compute Express Link (CXL), Universal Chiplet Interconnect Express (UCIe), or other connection technologies. See, for example, Peripheral Component Interconnect Express (PCIe) Base Specification 1.0 (2002), as well as earlier versions, later versions, and variations thereof. See, for example, Compute Express Link (CXL) Specification revision 1.0, version 0.7 (2019), as well as earlier versions, later versions, and variations thereof. See, for example, UCIe 1.0 Specification (2022), as well as earlier versions, later versions, and variations thereof.

Devices 140-0 to 140-A can include one or more of: a network interface device, accelerator, storage controller, storage device, memory device, another host system, or others. A network interface device can include one or more of: a network interface controller (NIC), a remote direct memory access (RDMA)-enabled NIC, SmartNIC, router, switch, forwarding element, infrastructure processing unit (IPU), data processing unit (DPU), or network-attached appliance.

In some examples, a process of processes 120 can utilize utilization monitor 122 to measure a busyness level of the process when executed by a processor of processors 102 and store the utilization in utilization data 116. The busyness level can indicate a relative level of busyness of the process (e.g., 0% to 100% or a numerical value). The busyness level can represent a number of cycles consumed by instructions and the software application executed on a particular core and exclude polling for work to perform. Other examples of levels of busyness can include quantized step levels of utilization from not utilized (e.g., 0) to fully utilized (e.g., 5), average utilization over a timespan, or others. Utilization monitor 122 can collect utilization of the process and input the utilization to power manager 106.

In some examples, operating system (OS) 124 can utilize utilization monitor 122 to collect utilization of one or more of processors 102 and store the utilization in utilization data 116. For example, utilization of one or more of processors 102 can indicate a level of utilization of a processor (e.g., 0% to 100% of usage and time or a numerical value). An example of processor utilization includes a task's total CPU usage divided by its elapsed running time and can be expressed as a percentage. Other examples of levels of busyness can include quantized step levels of utilization from not utilized (e.g., 0) to fully utilized (e.g., 5), average utilization over a timespan, or others.

In some examples, a process can call an application programming interface (API) to communicate with operating system 124 and/or driver 128 to query or discover capability of power manager 106 to adjust power and/or frequency of interface circuitry 104 based on utilization of one or more processors and in addition, or alternatively, based on one or more of: priority level of a requester that requested the adjustment of the frequency of the circuitry, type of the requester, and/or level of busyness or utilization level of a process executed by one or more processors. OS 124 can activate or deactivate power manager 106 to adjust power and/or frequency of interface circuitry 104 based on utilization of one or more processors and in addition, or alternatively, based on one or more of: priority level of a requester that requested the adjustment of the frequency of interface circuitry 104, type of the requester, or level of busyness or utilization level of a process executed by one or more processors.

Power manager 106 can select a frequency of operation of interface circuitry 104 based on configuration 114 and utilization of one or more processors 102 (e.g., utilization data 116) and in addition, or alternatively, based on one or more of priority level of a requester that requested the adjustment of the frequency of the circuitry, type of the requester, or level of busyness or utilization level of a process executed by one or more processors 102. Power manager 106 can access utilization data 116 by a push mode (utilization monitor 122 or 126 copying utilization data 116 to power manager 106) or pull mode (e.g., reading utilization data 116 from memory 112). For example, power manager 106 can be implemented in one or more of: firmware, processor-executed software, or power code (pcode) executed by power manager 106. Power manager 106 can control frequency of operations of processors 102 (e.g., frequency increase or decrease) and control power and/or frequency of operation of host 100. For example, power manager 106 may increase or decrease a frequency of operation of a processor of processors 102 based on utilization levels of the processor or processes executed by the processor being below a low level specified in configuration 114, in addition, or alternatively to reducing frequency of operation of interface circuitry 104.

In some examples, a frequency of operation can include a frequency of a clock signal, or a multiple or fraction thereof.

In some examples, adjustment of frequency of operation can refer to clock stretching whereby a frequency of a clock signal is reduced based on a level of voltage available to a processor being less than a level. An example of clock stretching is available from devices from Advanced Micro Devices, Inc.

A data center administrator, orchestrator, or other software can store configuration 114 in memory 112. Configuration 114 can specify one or more of: dates or days to apply a policy to manage frequency of operation of interface circuitry 104, time of day to apply the policy, particular cores in a corelist or group, particular cores in a socket, high and low frequency level of operation of interface circuitry 104, high and low utilization levels of one or more processors and processes, or other information. For example, configuration 114 can include system-wide, socket-wide and core-list based groups with utilization levels that trigger adjustment of frequency of operation of interface circuitry 104.

For example, based on a level of utilization of one or more processors cores being below a low utilization level for a configured amount of time or samples, power manager 106 can reduce the frequency of operation of interface circuitry 104 to reduce power consumption by interface circuitry 104. In some examples, power manager 106 can apply pseudocode below to determine whether to increase or reduce frequency of operation of interface circuitry 104 based on core group utilization levels, socket utilization levels, system utilization levels, and/or application utilization levels.

```
      if ((corelist0_av < corelist0_low_level) AND (socket0_av < socket0_low_level) AND
       (system_av < system_low_level)) AND (inst_busyness < inst_low_level)
             // reduce interface circuitry by an increment or a scaling factor if average
             utilization of cores in a core list, cores in a socket, cores in a system, and
             busyess level of one or more processes are below a low level
             if ((corelist0_av > corelist0_high_level) OR (socket0_av >
             socket0_high_level) OR (system_av > system_high_level)) OR (inst_busyness
             > inst_high_level)
             // increase interface circuitry frequency by an increment or a scaling factor if
             average utilization of cores in a core list, cores in a socket, cores in a system,
             or busyess level of one or more processes are above a high level
             
```

where:
corelist0_av can represent average measured utilization of cores in the corelist0;
socket0_av can represent average measured utilization of cores in the socket0;
system_av can represent average measured utilization of cores in the system;
inst_busyness can represent reported application utilization on one or more cores indicated by an application or process. A value of inst_busyness can indicate per-application busyness and can be provided by a polling workload or non-polling workload (e.g., kernel networking) can provide application busyness from OS 124;
inst_low_level can be configured by datacenter administrator and can represent low utilization level of a process; and
inst_high_level can be configured by datacenter administrator and can represent high utilization level of a process.

Reducing a frequency of operation of interface circuitry 104 can consider utilization of cores that share use of interface circuitry 104 to avoid violation of an applicable service level agreement (SLA) or service level objective (SLO) of processes when frequency of operations of interface circuitry 104 changes by disrupting a path from a processor to memory, or disrupting I/O and core to core communications.

In configuration 114, a data center administrator can assign cores into a core list or group so that different core lists or groups can be associated with different low and/or high levels of utilization or busyness. The following is an example of configuration 114 and example operation of power manager 106.
# category 1
   corelist0 [core identifiers 3-10, 47-55]: first (low) level percentage of busyness or utilization of core regardless of processes executed = 10 and second (high) level = 85 percentage of busyness or utilization of core regardless of processes executed
   corelist1 [core identifiers 15-32, 69-76]: first (low) level percentage of busyness or utilization of a core regardless of processes executed = 15 and second (high) level percentage of busyness or utilization of a core regardless of processes executed = 80
# category 2
   socket0: first (low) level average percentage of busyness or utilization of cores in CPU socket 0 = 25 and second (high) level average percentage of busyness or utilization of cores in CPU socket 0 = 75
   socket1: first (low) level average percentage of busyness or utilization of cores in CPU socket 0 = 30 and second (high) level average percentage of busyness or utilization of cores in CPU socket 0 = 70
# category 3
   system: first (low) level average percentage of busyness or utilization of cores in CPU socket 0 = 40 and second (high) level average percentage of busyness or utilization of cores in CPU socket 0 = 65.

An example of configuration file schema can be as follows:

```
       "uncore frequency scaling": {
                    "enabled": true,
                    "uncore upper": "auto",
                    "uncore lower": "auto",
                    "groups": [
                          {
                                 "group id": "group 1",
                                 "telemetry cores": 5-7,
                                 "smoothing samples": 10,
                                 "high threshold": "70",
                                 "low threshold": "50"
                          },
                          {
                                 "group id": "group 1",
                                 "telemetry cores": 5-10,
                                 "smoothing samples": 10,
                                 "high threshold": "75",
                                 "low threshold": "55"
                          },
                    ]
       }
```

Power manager 106 can be instantiated as software, as a hardware IP block in the CPU, as microcode in the CPU power controller, as firmware or as hardware in a management controller or others. When instantiated in the management controller, telemetry can be delivered to management controller and analytics systems (not shown) using out of band telemetry methods. A management controller can perform management and monitoring capabilities for system administrators to monitor operation at least of a host and devices connected thereto, such as, network interface device and storage device, using channels, including channels that can communicate data (e.g., in-band channels) and out-of-band channels. Out-of-band channels can include packet flows or transmission media that communicate metadata and telemetry and may not communicate data. In some examples, management controller can be implemented as one or more of: Board Management Controller (BMC), Intel^{®} Management or Manageability Engine (ME), or other devices.

Power manager 106 can be instantiated in software in one or more of: host operating system, hypervisor layer, container layer, a micro-service, a sidecar in a Kubernetes deployment, a daemon set in a Kubernetes deployment, or others.

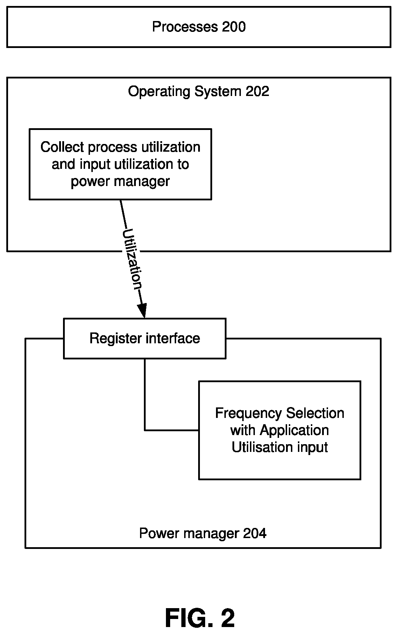

FIG. 2 depicts an example process for setting frequency of operations of an interface circuitry. Processes 200, executing on a processor or accelerator, can have an associated level of utilization or busyness. Processor-executed operating system 202 can monitor and collect utilization or busyness of processes 200 and provide the utilization to power manager 204. In some examples, OS 202 can write utilization of processes 200 into registers and power manager 204 can read utilization of processes 200 from registers written-to by OS 202. Based on utilization data, power manager 204 can determine whether to adjust a frequency of operation of interface circuitry based on comparison with low and high levels of utilizations of a processor core group, low and high levels of utilizations of a CPU socket, low and high levels of utilizations of a system, low and high levels of utilizations of a process, and/or a priority level of requester that requested a change to a frequency of operation of the interface circuitry.

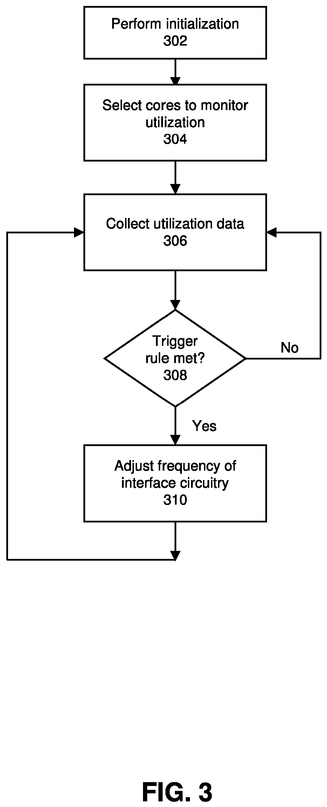

FIG. 3 depicts an example process. The process can be performed by a power manager, in some examples. At 302, initialization can be performed. For example, the system initialization can include reading a configuration file that specifies one or more of: a time to apply a policy, core(s) assigned to a group, high and low level ranges of average utilization by particular processor cores, high and low level ranges of average utilization by particular processor sockets, high and low level ranges of average utilization by a system, high and low level ranges of utilization of a process, or others. A configuration file can apply to a particular group of one or more cores to assess whether to adjust a frequency of operation of an interface circuitry. Where an interface circuitry is assigned to a particular group of cores, assessments of whether to adjust a frequency of operation of an interface circuitry can be performed based on a configuration for that particular group of cores.

At 304, cores that are to be monitored for utilization are identified. For example, cores that are to be monitored for utilization can be identified based on a configuration file or telemetry endpoint.

At 306, utilization data can be collected for the cores that are identified to be monitored. For example, utilization data can be collected from a dataplane, 5G User Plane Function (UPF) telemetry endpoint, OS telemetry endpoint, or other sources.

At 308, a determination can be made as to whether a trigger rule is met for adjusting frequency of an interface circuitry based on the configuration. For example, as described herein, adjustment to frequency of operation of the interface circuitry can be made based on high- and low-level parameters in the configuration and based on the utilization of the core, an average utilization of a group of one or more cores, an average utilization of a CPU socket, an average utilization of a system, and/or a utilization of an application.

At 310, the frequency of operation of the interface circuitry can be adjusted based on the determined frequency increase or decrease. For example, based on the utilization being below a low level for a number of measurements specified in the configuration file or endpoint, a frequency of operation of the interface circuitry can be reduced by an increment specified in the configuration file. The reduction in frequency of operation can be scaled according to a rate of reduction in the utilization over successive measurements so that a higher rate of decrease in utilization can lead to a higher rate of reduction in frequency of operation of the interface circuitry.

For example, based on the utilization being above a high level specified in the configuration file or endpoint, a frequency of operation of the interface circuitry can be increased by an increment specified in the configuration file. Based on the utilization increasing over successive measurements, the reduction in frequency of operation can be scaled up to a high level specified in the configuration file. The increase in frequency of operation can be scaled according to a rate of increase in the utilization over successive measurements so that a higher rate of increase in utilization can lead to a higher rate of increase in frequency of operation of the interface circuitry.

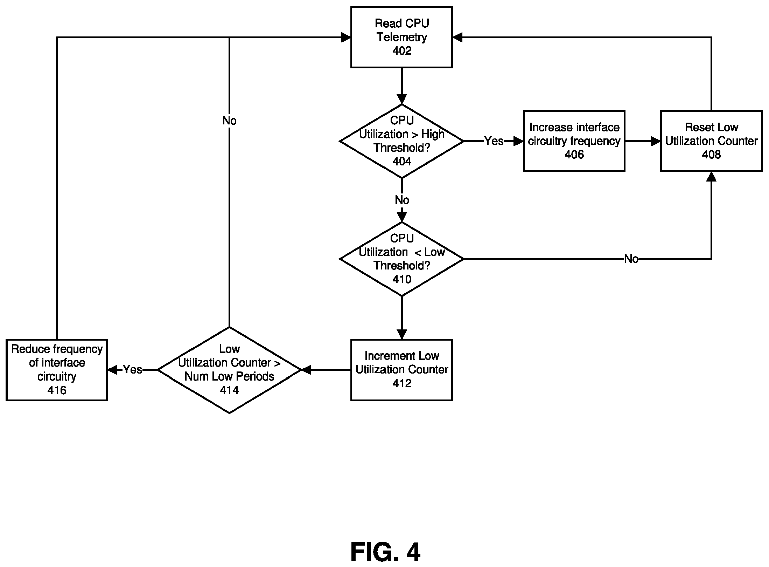

FIG. 4 depicts an example process. The process can be performed by a power manager, in some examples. At 402, processor utilization can be read. For example, an API call or a register read can access the utilization of one or more processor cores. At 404, a determination can be made if the processor utilization is more than a configured high level of utilization. Based on the processor utilization being more than the configured high level of utilization, the process can proceed to 406 to increase a frequency of operation of the interface circuitry based on a configuration, as described herein. At 408, the process can reset a counter for low level utilization.

At 410, based on the processor utilization being not more than the configured high level of utilization and the detected processor utilization being less than the configured low level of utilization, the process can proceed to 412 to count a number of times that the detected processor utilization is less than the configured low level of utilization. At 414, based on the number of times that the processor utilization is detected to be less than the configured low level of utilization being more than a configured number of times, the process can proceed to 416 to reduce a frequency of operation of the interface circuitry based on a configuration.

At 414, based on the number of times that the processor utilization is detected to be less than the configured low level of utilization not being more than a configured number of times, the process can proceed to 402.

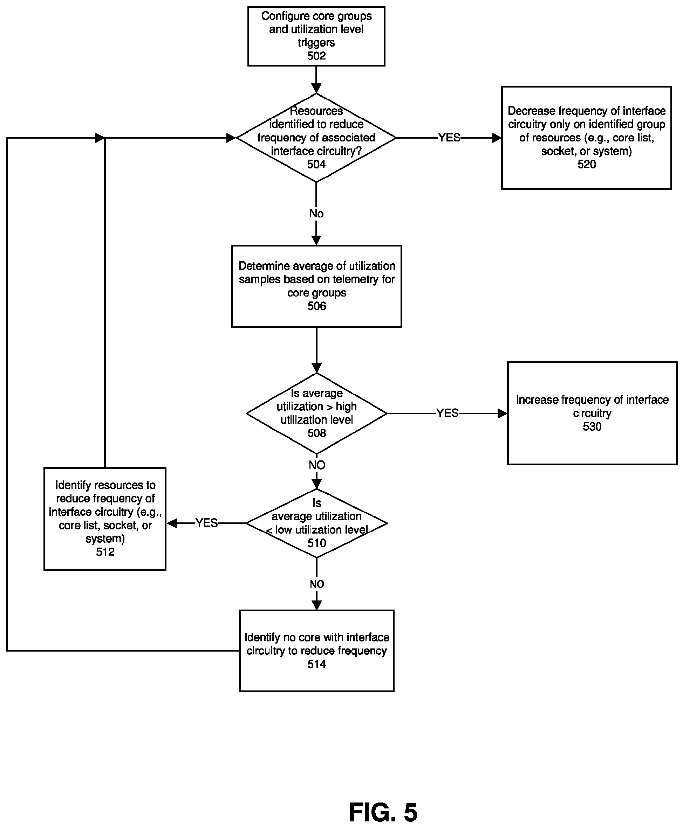

FIG. 5 depicts an example process for setting a frequency of an interface circuitry. The process can be performed by a power manager circuitry, in some examples. At 502, a configuration of a policy to apply to one or more cores can be set as well as corresponding high and low levels of utilization that trigger respective increases or decrease in frequency applied to an interface circuitry. For example, the one or more cores can be associated with a core group, processor socket, or system with two or more processor sockets. The high level of utilization can indicate levels of utilization of a core group, processor socket, and/or system with two or more processor sockets that trigger increase in frequency of operation to an interface circuitry or circuitries utilized by the core(s) of the core group, processor socket, and/or system with two or more processor sockets. The configuration can also specify other parameters, described herein.

At 504, a determination can be made as to whether one or more resources (e.g., processor cores) have been identified that have an associated interface circuitry that is to have frequency of operation reduced. Based on one or more resources have been identified that have an associated interface circuitry that is to have frequency of operation reduced, the process can proceed to 520. Based on one or more resources having not been identified that have an associated interface circuitry that is to have frequency of operation reduced, the process can proceed to 506.

At 506, an average of utilization measured on the cores identified in the configuration can be determined. For example, the configuration can specify a number of utilization measurements to average or a time window of utilization measurements to average.

At 508, a determination can be made if the utilization meets or exceeds the high utilization level specified in the configuration. For example, the configuration can specify high utilization levels for one or more of a core list, processor socket, or system. Based on the utilization meets or exceeds the high utilization level for one or more of a core list, processor socket, or system, the process can continue to 530. Based on the utilization not meeting and being less than the high utilization level for one or more of the core list, processor socket, or system, the process can continue to 510.

At 510, a determination can be made if the utilization meets or is below the low utilization level specified in the configuration. For example, the configuration can specify low utilization levels for the core list, processor socket, and system. Based on the utilization meets or is less than the low utilization levels of the core list, processor socket, and system, the process can continue to 512. Based on the utilization does not meet and is more than the low utilization levels of the core list, processor socket, and system, the process can continue to 514.

In some examples, to lower a frequency of operation of an interface circuitry, utilization meets or is less than the low utilization level of all of the core list, processor socket, and system. In some examples, to lower a frequency of operation of an interface circuitry associated with a particular core list, utilization meets or is less than the low utilization level of merely the core list, or others. In some examples, to lower a frequency of operation of an interface circuitry associated with a particular processor socket, utilization meets or is less than the low utilization level of merely the processor socket, or others. In some examples, to lower a frequency of operation of an interface circuitry associated with a system of two or more processor sockets, utilization meets or is less than the low utilization level of merely the system of two or more processor sockets, or others. For example, if cores 0-20 share use of an interface circuitry and if utilization of core 0 is 100% and utilization of cores 1-20 are 0%, then operation of core 0 could be negatively impacted if reduce frequency of the interface circuitry. Various examples avoid reducing frequency of operation of an interface circuitry that is utilized by cores that are operating at utilization levels above a low utilization level threshold to avoid reducing performance of such cores.

At 512, resources associated with an interface circuitry for which to reduce frequency of operation are identified. For example, resources can be associated with a core list, processor socket, or system of two or more processor sockets. The process can return to 504.

However, at 514, no resource associated is identified with an interface circuitry for which to reduce frequency of operation. The process can return to 504.

At 520, frequency of operation of one or more interface circuitry can be reduced based on the configuration. In some examples, a frequency of operation can be lowered for an interface circuitry associated with an identified particular core list. In some examples, a frequency of operation can be lowered for an interface circuitry associated with an identified particular processor socket. In some examples, a frequency of operation can be lowered for an interface circuitry associated with an identified particular system of two or more processor sockets. A level of frequency reduction of an interface circuitry can occur by a scaling factor. A scaling factor can be based on rate of change of utilization.

At 530, frequency of operation of one or more interface circuitry can be increased based on the configuration. In some examples, a frequency of operation can be increased for an interface circuitry associated with an identified particular core list associated with utilization above a high level. In some examples, a frequency of operation can be increased for an interface circuitry associated with an identified particular processor socket associated with utilization above a high level. In some examples, a frequency of operation can be increased for an interface circuitry associated with an identified system associated with utilization above a high level. A level of frequency increase of an interface circuitry can occur by a scaling factor. A scaling factor can be based on rate of change of utilization.

### PRIORITY-BASED CONTROL OF INTERFACE CIRCUITRY

Performance of processes can be compute bounded, cache/memory bounded, and/or I/O bounded. For memory bound processes, whose performance is based on rates of data access from memory (e.g., cache or volatile memory), reducing frequency of operation of interface circuitry can reduce the performance of the process (e.g., latency, throughput, jitter, etc.).

In some examples, a basic input/output system (BIOS), boot firmware (e.g., Universal Extensible Firmware Interface (UEFI) or a boot loader), and/or processor-executed software can: (1) determine the cache miss and memory bandwidth and input output (IO) traffic level to determine whether to trigger modification of frequency of the interface circuitry to a lower value and (2) based on requests from multiple tenants, for memory bound and multi-socket applications, reduce the frequency of the interface circuitry. However, in a single or multi-tenant environment, a lower priority level workload may lower the frequency of an interface circuitry and impact latency and jitter key performance indicators (KPIs) of a higher priority workload.

Various examples described herein can prioritize frequency adjustment of the interface circuitry based on class of service of a requester to provide frequency scaling and power saving but potentially prevent lower priority workloads from interfering with performance of higher priority workloads. In some examples, a class of service allows power manager of the interface circuitry to prioritize setting the frequency based on the priority of the requester, so that a higher priority workload requesting a change to frequency of the interface circuitry can overrule requests from lower priority requesters to change a frequency of the interface circuitry. Hence, a higher priority workload can control frequency of the interface circuitry and prevent lower priority workloads from controlling frequency of the interface circuitry. Workloads can be grouped into a class of service serving a group of requestors and executed on particular core(s) so that the particular core(s) execute processes associated with a particular class of service. A priority level can be based on a priority of a workload requester.

Various examples can trigger reducing frequency of interface circuitry and trigger power savings without impacting performance of deterministic workloads. Some examples can reduce frequency of operation of the interface circuitry based on telemetry, workload load (e.g., workload busyness or core utilizable by a workload), priority (class of service (CoS)) of the workload or process, priority of the workload relative to priority of another workload, and/or admission controller to arbitrate priorities. A workload or process can be identified by a Resource Monitoring ID (RMID) of core or Process Address Space ID (PASID) of requester process. An identifier can be assigned to a requester process before a workload or process starts. The identifier can be associated with a priority level.

Various examples can target prioritization of frequency setting for a subset of the processes running on a given CPU. For example, CPUs may utilize a single clock or multiple uncore clocks to control frequency of operation of one or more interface circuitries.

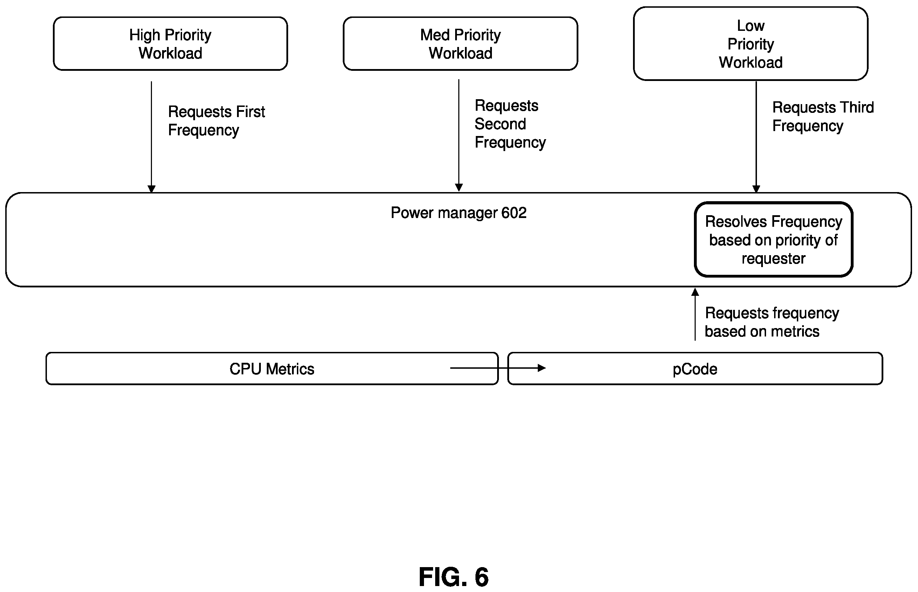

FIG. 6 depicts an example system. Power manager 602 can receive requests from workloads (e.g., processes or circuitries) to change a frequency of operation of an interface circuitry. For example, a high priority workload (e.g., process or circuitry) can request to change a frequency of operation of the interface circuitry to a first frequency. For example, a medium priority workload (e.g., process or circuitry) can request to change a frequency of operation of the interface circuitry to a second frequency. For example, a low priority workload (e.g., process or circuitry) can request to change a frequency of operation of the interface circuitry to a third frequency.

Power manager 602 can resolve and determine a frequency of operation of the interface circuitry (not shown) based on a programmable policy considering requester priority, application type, application utilization, or other factors, such as utilization of one or more cores, utilization of one or more CPU sockets, utilization of a system, and/or utilization of a process or workload, described herein. In some examples, a policy can specify a user-configured setting of whether a workload or the firmware or pcode are to specify a frequency level of the interface circuitry. In some examples, where permitted by the setting, power manager 602 can apply a frequency requested by a highest priority workload to the interface circuitry. In some examples, power manager 602 may decrease a frequency of operation of an interface circuitry based on priority of requester and also based on utilization of the core that executes the requester and utilization of at least one other core in a core group, CPU socket, and/or system. For example, if a high priority requester requests to reduce a frequency of operation of the interface circuitry but a utilization of at least one other core in a core group, CPU socket, and/or system is above a level set in a configuration, then power manager 602 may not reduce the frequency of operation of the interface circuitry to prevent degradation of performance of processes executed by the at least one other core, or may reduce the frequency of operation less than requested. For example, if a high priority requester requests to reduce a frequency of operation of the interface circuitry but a utilization of at least one other core in a core group, CPU socket, and/or system is at or below a second level set in a configuration, then power manager 602 may reduce the frequency of operation of the interface circuitry to a requested level as reducing the frequency of operation of the interface circuitry may not degrade performance of processes executed by the at least one other core.

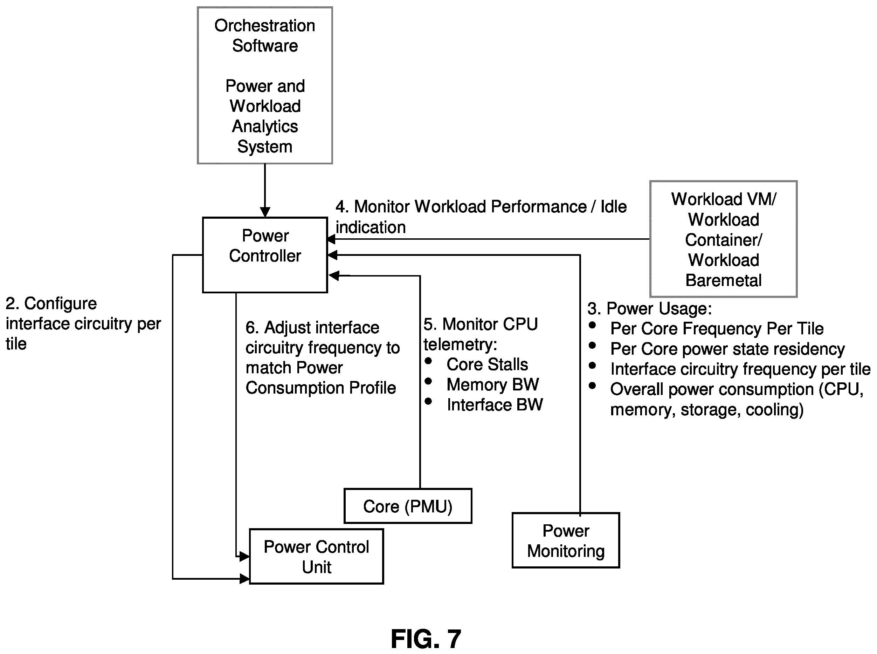

FIG. 7 depicts an example system. An example operations is as follows. At (1), orchestrator and/or power and workload analytics system can configure power controller to apply policy parameters. Policy parameters can apply to a tile and specify one or more of: maximum burst power or frequency; average power or frequency; shared power usage (e.g., ratio of interface circuitry frequency of operation to core frequency of operation); exceeded power threshold behavior; whether capping or sharing can be implemented with an overall power budget for CPU; overall power budget for a combination of CPU, memory, and storage cooling; workload locality on CPU tile to local interface circuitry clock; power consumption profile that indicates workload power/load curve for specific workload over X hours/week; workload KPIs (e.g., latency, throughput, or others); workload sensitivity to interface circuitry frequency; or others.

At (2), power controller can configure per tile frequency as per policy description or defaults. For example, power controller can configure per tile parameters including lowest base frequency and/or starting frequency.

At (3), power controller can monitor requests for frequency changes and arbitrate requests based on priority of requester and power usage information. For example, power controller can receive power usage information, including one or more of: per-core frequency per tile, per-core power state residency, interface circuitry frequency per tile, and/or overall power consumption (e.g., CPU, memory, storage, cooling). At (4), the power controller can receive indications of workload performance or idle indications. At (5), the power controller can receive CPU telemetry (e.g., core stalls, memory bandwidth utilization, inter-socket interface bandwidth utilization, or others).

At (6), power controller can adjust frequency of operation of the interface circuitry based on power consumption profile and SLA/SLO for a process. Power controller can prioritize frequency adjustment of the interface circuitry based on class of service of a requester to provide frequency scaling and power saving to attempt to prevent lower priority workloads from interfering with performance of higher priority workloads. However, in some examples, power controller can adjust frequency of the interface circuitry based on commands from the firmware or pcode.

Where priority levels of requesters is equal, one or more of the following can be applied. For example, multiple requestors with the same priority can be grouped and one or more actions performed for the requesters, per the policy. Hence, multiple tenants can agree on decrease in frequency of interface circuitry. Hence, a same decrease in frequency of interface circuitry can apply to a set of multiple requestors with a same priority level. In some examples, for requests from multiple requestors with the same priority, requests can be prioritized based on application type, requester with longest or shortest duration, round robin, or other scheme.

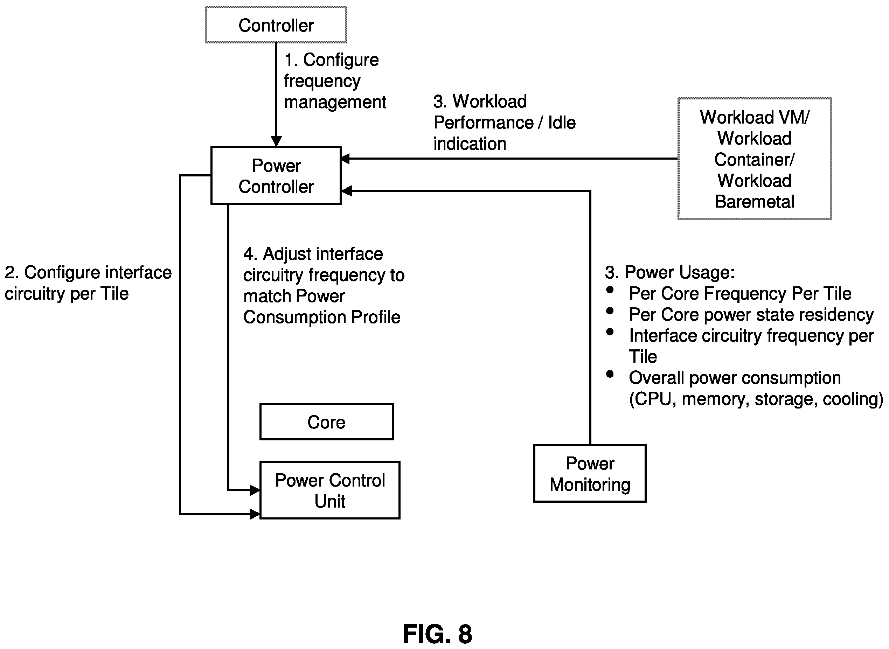

FIG. 8 depicts an example system. An example operations is as follows. At (1), a controller (e.g., software defined networking (SDN) orchestrator, Management and Orchestration (MANO) stack, or Kubernetes orchestrator) can configure a policy to manage frequency of operation of an interface circuitry and configure workloads (e.g., processes or bare metal operation) to execute on a particular processor and interface circuitry. Policy parameters can apply to a tile and specify one or more of: maximum burst power or frequency; average power or frequency; shared power usage (e.g., ratio of interface circuitry frequency of operation to core frequency of operation); exceeded power threshold behavior; whether capping or sharing can be implemented with an overall power budget for CPU; overall power budget for a combination of CPU, memory, and storage cooling; workload locality on CPU tile to local interface circuitry clock; power consumption profile that indicates workload power/load curve for specific workload over X hours/week; workload KPIs (e.g., latency, throughput, or others); workload sensitivity to interface circuitry frequency; or others. An example policy can specify one or more of: priority of requestor or class of service, maximum burst power or frequency (e.g., maximum frequency), minimum burst power or frequency (e.g., minimum frequency), utilization threshold, application type, rate of control (e.g., hysteresis timer), or duration to apply policy (e.g., time or days).

At (2), power controller can configure interface circuitry per tile frequency management as per policy description or a default configuration that allows management of frequency of interface circuitry regardless of priority of requester. For example, per tile parameters can include one or more of: lowest base frequency of operation and/or starting frequency of operation.

At (3), power controller can monitor requests for frequency changes and arbitrate requests based on a policy. For example, power controller can receive power usage data including one or more of: per core frequency of operation, per tile frequency of operation, per core power state residency, interface circuitry frequency per tile, and/or overall power consumption (e.g., CPU, memory, storage, cooling).

For example, Table 1 depicts an example of a policy to arbitrate requests from applications based on requester class of service. In this example, a low priority tenant request to set the frequency of the interface circuitry to 1.0GHz is resolved to 1.4GHz as 1.4GHz is the minimum or low level of frequency of operation of the interface circuitry for the high priority application or tenant. In other words, the policy may prevent a frequency of operation of the interface circuitry from being below a low level for a higher or highest priority tenant or application despite a request from another requester to lower the frequency below the low level.

**Table 1**

| High Priority Application/Tenant | Low Priority Application/Tenant |
|---|---|
| Mandatory: Priority 1 | Mandatory: Priority 2 |
| Mandatory Max Interface Circuitry Frequency: 1.8GHz | Mandatory Maximum Interface Circuitry Frequency: 1.0GHz |
| Mandatory Min Interface Circuitry Frequency: 1.4GHz | Mandatory Minimum Interface Circuitry Frequency: 0.7GHz |

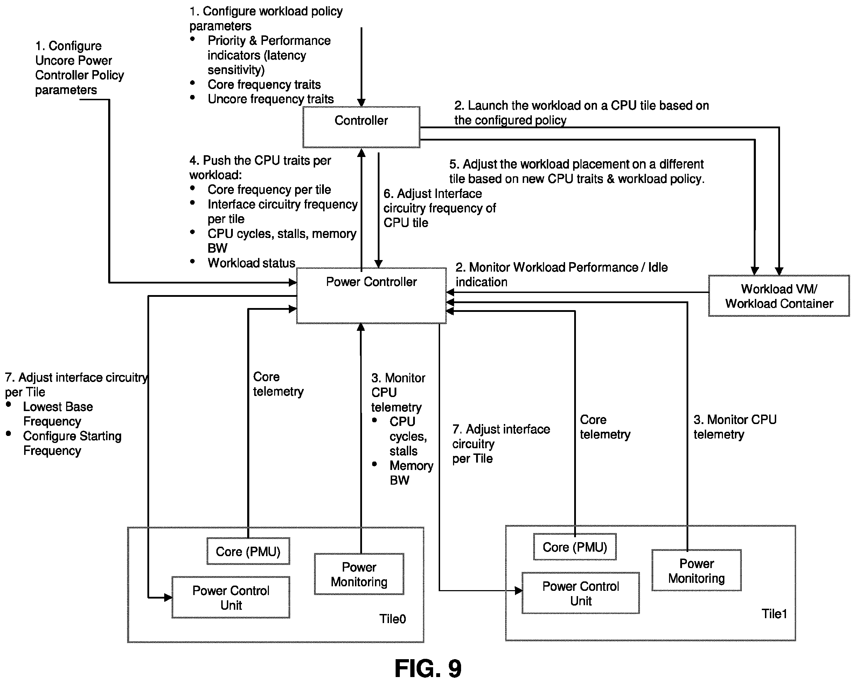

FIG. 9 depicts an example of workload placement so that workloads (e.g., processes) with similar policies concerning interface circuitry frequency settings are executed by the same one or more cores. At (1), a controller can configure a policy that defines management of frequency of operation of an interface circuitry and controller can configure workloads (e.g., processes) to execute on a particular processor and interface circuitry to avoid impacts when running on a same tile that share use of an interface circuitry, so that policies can be applied per tile or group of cores that are connected to a single interface circuitry by a fabric or other interconnect.

At (2), the controller can consider the power profile of a workload so that a tile is selected to execute the workload to satisfy the core frequency and interface circuitry power policies of the workload. In other words, an orchestrator can cause workloads with similar power profiles, such similar same KPIs, to be grouped to execute on cores of a common tile or CPU. Placement of workloads on tiles can occur so that interface circuitry frequency are likely to be scaled down at quiet times for workloads with similar policies or scaled up at the same times.

At (3), power controller associated with a tile (e.g., tile 0 and tile 1) can monitor CPU telemetry including CPU cycles performed, stalls, memory bandwidth. At (4), power controller can provide CPU traits per workload to the controller, such as one or more of: core frequency per tile, interface circuitry (e.g., uncore) frequency per tile, CPU cycles performed, stalls, memory bandwidth, workload status (e.g., completed or in process). At (5), controller can potentially adjust a placement of a workload to a different tile based on KPIs, SLAs, or SLOs of the workload not being met.

At (6), controller can adjust a frequency of operation of the interface circuitry of a particular CPU tile, based on utilization of one or more cores, utilization of a process, and/or priority of a requester that requested change of frequency of operation of the interface circuitry. At (7), a power control circuitry can adjust a frequency of operation of an associated interface circuitry as determined in (6).

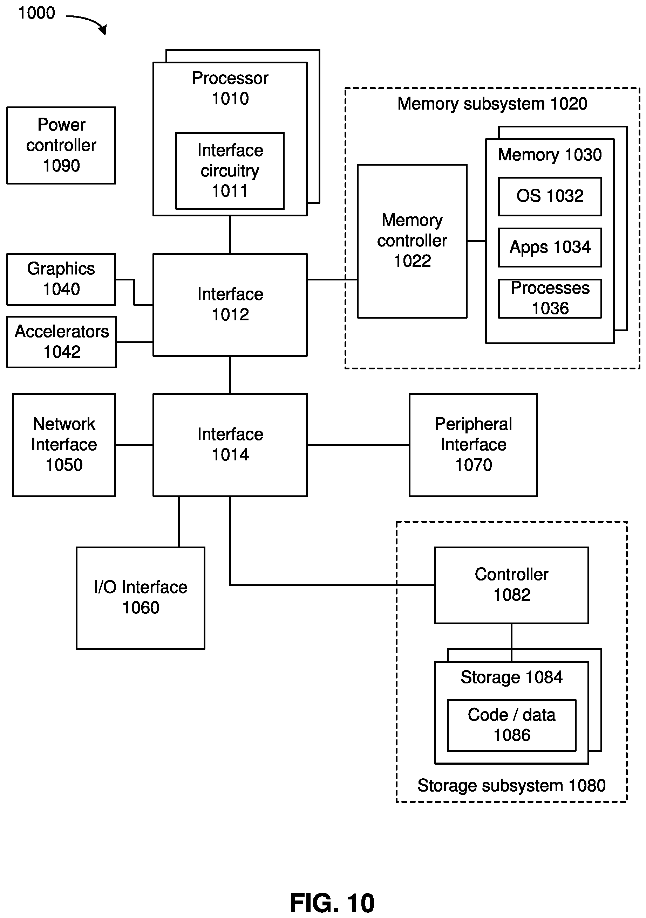

FIG. 10 depicts a system. In some examples, circuitry of processor 1010 or other device can adjust a frequency of interface circuitry 1011, as described herein. Interface circuitry 1011 can provide an interface for processor 1010 to interface 1012 and other circuitry. System 1000 includes processor 1010, which provides processing, operation management, and execution of instructions for system 1000. Processor 1010 can include any type of microprocessor, central processing unit (CPU), graphics processing unit (GPU), XPU, processing core, or other processing hardware to provide processing for system 1000, or a combination of processors. An XPU can include one or more of: a CPU, a graphics processing unit (GPU), general purpose GPU (GPGPU), and/or other processing units (e.g., accelerators or programmable or fixed function FPGAs). Processor 1010 controls the overall operation of system 1000, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 1000 includes interface 1012 coupled to processor 1010, which can represent a higher speed interface or a high throughput interface for system components that needs higher bandwidth connections, such as memory subsystem 1020 or graphics interface components 1040, or accelerators 1042. Interface 1012 represents an interface circuit, which can be a standalone component or integrated onto a processor die. Where present, graphics interface 1040 interfaces to graphics components for providing a visual display to a user of system 1000. In one example, graphics interface 1040 can drive a display that provides an output to a user. In one example, the display can include a touchscreen display. In one example, graphics interface 1040 generates a display based on data stored in memory 1030 or based on operations executed by processor 1010 or both. In one example, graphics interface 1040 generates a display based on data stored in memory 1030 or based on operations executed by processor 1010 or both.

Accelerators 1042 can be a programmable or fixed function offload engine that can be accessed or used by a processor 1010. For example, an accelerator among accelerators 1042 can provide data compression (DC) capability, cryptography services such as public key encryption (PKE), cipher, hash/authentication capabilities, decryption, or other capabilities or services. In some cases, accelerators 1042 can be integrated into a CPU socket (e.g., a connector to a motherboard or circuit board that includes a CPU and provides an electrical interface with the CPU). For example, accelerators 1042 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 1042 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models to perform learning and/or inference operations.

Memory subsystem 1020 represents the main memory of system 1000 and provides storage for code to be executed by processor 1010, or data values to be used in executing a routine. Memory subsystem 1020 can include one or more memory devices 1030 such as read-only memory (ROM), flash memory, one or more varieties of random access memory (RAM) such as DRAM, or other memory devices, or a combination of such devices. Memory 1030 stores and hosts, among other things, operating system (OS) 1032 to provide a software platform for execution of instructions in system 1000. Additionally, applications 1034 can execute on the software platform of OS 1032 from memory 1030. Applications 1034 represent programs that have their own operational logic to perform execution of one or more functions. Processes 1036 represent agents or routines that provide auxiliary functions to OS 1032 or one or more applications 1034 or a combination. OS 1032, applications 1034, and processes 1036 provide software logic to provide functions for system 1000. In one example, memory subsystem 1020 includes memory controller 1022, which is a memory controller to generate and issue commands to memory 1030. It will be understood that memory controller 1022 could be a physical part of processor 1010 or a physical part of interface 1012. For example, memory controller 1022 can be an integrated memory controller, integrated onto a circuit with processor 1010.

Applications 1034 and/or processes 1036 can refer instead or additionally to a virtual machine (VM), container, microservice, processor, or other software. Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can communicate with one another using a service mesh and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

In some examples, OS 1032 can be Linux^{®}, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a processor sold or designed by Intel^{®}, ARM^{®}, AMD^{®}, Qualcomm^{®}, IBM^{®}, Nvidia^{®}, Broadcom^{®}, Texas Instruments^{®}, among others. OS 1032 can activate or deactivate a power manager circuitry 1090 to adjust power and/or frequency of interface circuitry 1011 based on utilization of one or more processors and in addition, or alternatively, based on one or more of: priority level of a requester that requested the adjustment of the frequency of interface circuitry 1011, type of the requester, or level of busyness or utilization level of a process executed by one or more processors.

While not specifically illustrated, it will be understood that system 1000 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 1000 includes interface 1014, which can be coupled to interface 1012. In one example, interface 1014 represents an interface circuit, which can include standalone components and integrated circuitry. In one example, multiple user interface components or peripheral components, or both, couple to interface 1014. Network interface 1050 provides system 1000 the ability to communicate with remote devices (e.g., servers or other computing devices) over one or more networks. Network interface 1050 can include an Ethernet adapter, wireless interconnection components, cellular network interconnection components, USB (universal serial bus), or other wired or wireless standards-based or proprietary interfaces. Network interface 1050 can transmit data to a device that is in the same data center or rack or a remote device, which can include sending data stored in memory. Network interface 1050 can receive data from a remote device, which can include storing received data into memory. In some examples, packet processing device or network interface device 1050 can refer to one or more of: a network interface controller (NIC), a remote direct memory access (RDMA)-enabled NIC, SmartNIC, router, switch, forwarding element, infrastructure processing unit (IPU), or data processing unit (DPU).

In one example, system 1000 includes one or more input/output (I/O) interface(s) 1060. I/O interface 1060 can include one or more interface components through which a user interacts with system 1000. Peripheral interface 1070 can include any hardware interface not specifically mentioned above. Peripherals refer generally to devices that connect dependently to system 1000.

In one example, system 1000 includes storage subsystem 1080 to store data in a nonvolatile manner. In one example, in certain system implementations, at least certain components of storage 1080 can overlap with components of memory subsystem 1020. Storage subsystem 1080 includes storage device(s) 1084, which can be or include any conventional medium for storing large amounts of data in a nonvolatile manner, such as one or more magnetic, solid state, or optical based disks, or a combination. Storage 1084 holds code or instructions and data 1086 in a persistent state (e.g., the value is retained despite interruption of power to system 1000). Storage 1084 can be generically considered to be a "memory," although memory 1030 is typically the executing or operating memory to provide instructions to processor 1010. Whereas storage 1084 is nonvolatile, memory 1030 can include volatile memory (e.g., the value or state of the data is indeterminate if power is interrupted to system 1000). In one example, storage subsystem 1080 includes controller 1082 to interface with storage 1084. In one example controller 1082 is a physical part of interface 1014 or processor 1010 or can include circuits or logic in both processor 1010 and interface 1014.

A volatile memory is memory whose state (and therefore the data stored in it) is indeterminate if power is interrupted to the device. A non-volatile memory (NVM) device is a memory whose state is determinate even if power is interrupted to the device.

In an example, system 1000 can be implemented using interconnected compute sleds of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe (e.g., a non-volatile memory express (NVMe) device can operate in a manner consistent with the Non-Volatile Memory Express (NVMe) Specification, revision 1.3c, published on May 24, 2018 ("NVMe specification") or derivatives or variations thereof).

Communications between devices can take place using a network that provides die-to-die communications; chip-to-chip communications; circuit board-to-circuit board communications; and/or package-to-package communications. Die-to-die communications can utilize Embedded Multi-Die Interconnect Bridge (EMIB) or an interposer. Components of examples described herein can be enclosed in one or more semiconductor packages. A semiconductor package can include metal, plastic, glass, and/or ceramic casing that encompass and provide communications within or among one or more semiconductor devices or integrated circuits. Various examples can be implemented in a die, in a package, or between multiple packages, in a server, or among multiple servers. An SiP can include a package that encloses one or more of: an SoC, one or more tiles, or other circuitry.

In an example, system 1000 can be implemented using interconnected compute platforms of processors, memories, storages, network interfaces, and other components. High speed interconnects can be used such as PCIe, Ethernet, or optical interconnects (or a combination thereof).

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade includes components common to conventional servers, including a main printed circuit board (main board) providing internal wiring (e.g., buses) for coupling appropriate integrated circuits (ICs) and other components mounted to the board.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission, or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative embodiments. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z.'"

Illustrative examples of the devices, systems, and methods disclosed herein are provided below. An embodiment of the devices, systems, and methods may include any one or more, and any combination of, the examples described below.

Example 1 includes one or more examples, and includes an apparatus comprising: a system in package (SiP) comprising: an interface circuitry and first circuitry to: monitor utilization data for a plurality of processes; determine one or more priority levels associated with at least one of the plurality of processes based on policy parameters; and adjust a frequency of operation of the interface circuitry based on the monitored utilization data and the determined priority levels of the processes, wherein: the adjust the frequency of operation of the interface circuitry is to prioritize frequency of operation requested by a higher priority workload over a frequency of operations requested by a lower priority workload and the interface circuitry comprises one or more of: a memory controller, direct memory access (DMA) circuitry, a cache, processor-to-processor interconnect, or a bus controller.

Example 2 includes one or more examples, wherein the first circuitry comprises one of: processor-executed software, hardware, processor-executed microcode, firmware, or a management controller.

Example 3 includes one or more examples, wherein the policy parameters include Service Level Objectives (SLOs) for the processes and wherein the adjust the frequency of operation of the interface circuitry is to satisfy the SLOs and adjust power consumption.

Example 4 includes one or more examples, and includes second circuitry to collect telemetry data, wherein the first circuitry is to monitor power consumption levels of the interface circuitry based on the telemetry data.

Example 5 includes one or more examples, wherein the first circuitry is to: decrease a frequency of operation of the interface circuitry based on utilization levels of multiple cores and process utilization on at least one of the multiple cores and increase a frequency of operation of the interface circuitry based on a utilization level of one or more core of the multiple cores or process utilization on at least one of the multiple cores.

Example 6 includes one or more examples, wherein: the at least one of the multiple cores comprises a first core and the first core is to request to adjust the frequency of operation of the interface circuitry based on a utilization of the first core by a process executed by the first core and/or a level of the utilization of the first core.

Example 7 includes one or more examples, wherein the process comprises a Kubernetes pod.

Example 8 includes one or more examples, wherein the first circuitry is to adjust the frequency of operation of the interface circuitry based on one or more of: priority level of a requester that requested the adjustment of the frequency of the interface circuitry, type of the requester, or utilization level of the first core by the requester.

Example 9 includes one or more examples, wherein the SiP comprises one or more processors and the one or more processors are coupled to the interface circuitry.

Example 10 includes one or more examples, and includes at least one non-transitory computer-readable medium, comprising instructions stored thereon, that if executed by one or more processors, cause the one or more processors to: execute firmware that is to: monitor utilization of one or more processors and selectively modify a frequency of operation of an interface circuitry for the one or more processors based on the utilization of the one or more processors, wherein the interface circuitry comprises one or more of: a memory controller, direct memory access (DMA) circuitry, a cache, processor-to-processor interconnect, or a bus controller.

Example 11 includes one or more examples, wherein: the firmware is to cause decrease of a frequency of operation of the interface circuitry based on utilization levels of the one or more processors and process utilization on at least one of the one or more processors.

Example 12 includes one or more examples, wherein: the firmware is to cause decrease of a frequency of operation of the interface circuitry based on multiple processors of the one or more processors that share use of the interface circuitry permitting reducing the frequency of operation or the multiple processors of the one or more processors having a utilization level that is less than a configured low level.

Example 13 includes one or more examples, wherein: the firmware is to cause increase of a frequency of operation of the interface circuitry based on at least one utilization level of the one or more processors or process utilization on at least one of the one or more processors.

Example 14 includes one or more examples, wherein: the firmware is to cause increase of a frequency of operation of the interface circuitry based on a priority level of a requester that requested to increase a frequency of operation of the interface circuitry.

Example 15 includes one or more examples, and includes a method of making a processor comprising: coupling multiple processors to an interface circuitry and coupling the interface circuitry to a power controller, wherein the power controller adjusts a frequency of operation of the interface circuitry based on utilization of one or more of the multiple processors and wherein the interface circuitry comprises one or more of: a memory controller, direct memory access (DMA) circuitry, a cache, processor-to-processor interconnect, or a bus controller.

Example 16 includes one or more examples, wherein the power controller compares a processor utilization with utilization levels to determine whether to increase or decrease the frequency.

Example 17 includes one or more examples, wherein the power controller decreases a frequency of the interface circuitry based on a consecutive number of times processor utilization is below a level.

Example 18 includes one or more examples, wherein the power controller reduces the frequency based on utilization levels of processors that utilize the interface circuitry and wherein the power controller increases the frequency based on a priority level of a requester that requested to increase the frequency.

Example 19 includes one or more examples, wherein based on increasing a frequency of the interface circuitry, the power controller resets a number of counts of measurements of utilization of a processor that are below a level.

Example 20 includes one or more examples, wherein the power controller comprises one or more of: a processor-executed software, hardware, processor-executed microcode, firmware, or a management controller.

## Claims

1. An apparatus comprising:
a system in package (SiP) comprising:
an interface circuitry and
first circuitry to:
monitor utilization data for a plurality of processes;
determine one or more priority levels associated with at least one of the plurality of processes based on policy parameters; and
adjust a frequency of operation of the interface circuitry based on the monitored utilization data and the determined one or more priority levels associated with at least one of the plurality of processes, wherein:
the adjust the frequency of operation of the interface circuitry is to prioritize frequency of operation requested by a higher priority workload over a frequency of operations requested by a lower priority workload and
the interface circuitry comprises one or more of: a memory controller, direct memory access (DMA) circuitry, a cache, processor-to-processor interconnect, or a bus controller.

2. The apparatus of claim 1, wherein the first circuitry comprises one of: processor-executed software, hardware, processor-executed microcode, firmware, or a management controller.

3. The apparatus of one of the previous claims, wherein the policy parameters include Service Level Objectives (SLOs) for the processes and wherein the adjust the frequency of operation of the interface circuitry is to satisfy the SLOs and adjust power consumption.

4. The apparatus of one of the previous claims, comprising:
second circuitry to collect telemetry data, wherein the first circuitry is to monitor power consumption levels of the interface circuitry based on the telemetry data.

5. The apparatus of one of the previous claims, wherein the first circuitry is to:
decrease a frequency of operation of the interface circuitry based on utilization levels of multiple cores and process utilization on at least one of the multiple cores and
increase a frequency of operation of the interface circuitry based on a utilization level of one or more core of the multiple cores or process utilization on at least one of the multiple cores.

6. The apparatus of one of the previous claims, wherein:
the at least one of the multiple cores comprises a first core and
the first core is to request to adjust the frequency of operation of the interface circuitry based on a utilization of the first core by a process executed by the first core and/or a level of the utilization of the first core.

7. The apparatus of claim 6, wherein the process comprises a Kubernetes pod.

8. The apparatus of claim 6 or 7, wherein
the first circuitry is to adjust the frequency of operation of the interface circuitry based on one or more of: priority level of a requester that requested the adjustment of the frequency of the interface circuitry, type of the requester, or utilization level of the first core by the requester.

9. The apparatus of one of the previous claims, wherein the SiP comprises one or more processors and the one or more processors are coupled to the interface circuitry.

10. A method comprising:
a power controller adjusting a frequency of operation of the interface circuitry based on utilization of one or more of the multiple processors, wherein the interface circuitry comprises one or more of: a memory controller, direct memory access (DMA) circuitry, a cache, processor-to-processor interconnect, or a bus controller.

11. The method of claim 11, comprising:
the power controller comparing a processor utilization with utilization levels to determine whether to increase or decrease the frequency.

12. The method of claim 11 or 12, comprising:
the power controller decreasing a frequency of the interface circuitry based on a consecutive number of times processor utilization is below a level and
the power controller reducing the frequency based on utilization levels of processors that utilize the interface circuitry, wherein the power controller increases the frequency based on a priority level of a requester that requested to increase the frequency.

13. The method of any one of claims 10-12, comprising:
based on increasing a frequency of the interface circuitry, the power controller resetting a number of counts of measurements of utilization of a processor that are below a level.

14. The method of any one of claims 10-13, wherein the power controller comprises one or more of: a processor-executed software, hardware, processor-executed microcode, firmware, or a management controller.

15. A computer-readable medium comprising instructions that if executed, by one or more processors, implement a method or realise an apparatus as claimed in any preceding claim.
